# EUROPEAN PATENT SPECIFICATION

(11) **EP 2 938 574 B1**
(45) Date of publication and mention of the grant of the patent: **05.09.2018**
(21) Application number: 13828878.2
(22) Date of filing: 27.12.2013
(51) Int. Cl.: C02F 1/28, C02F 1/68, C02F 101/32

(54) **PROCESS FOR REMOVING HYDROCARBONS FROM A BODY OF WATER BY MEANS OF SELECTIVE PERMEATION, AND RELATIVE APPARATUS**
VERFAHREN ZUR ENTFERNUNG VON KOHLENWASSERSTOFFEN AUS EINER WASSERMENGE MITTELS SELEKTIVER PERMEATION UND ENTSPRECHENDE VORRICHTUNG
PROCÉDÉ DE RETRAIT D'HYDROCARBURES D'UN PLAN D'EAU PAR PERMÉATION SÉLECTIVE ET APPAREIL ASSOCIÉ

(30) Priority: 28.12.2012 IT MI20122254
(43) Date of publication of application: 04.11.2015
(73) Proprietor: ENI S.p.A., 00144 Rome (IT)
(72) Inventor: RUBERTELLI, Francesca, I-28100 Novara (NO) (IT); CONTE, Alessandro, I-28066 Galliate (NO) (IT)
(74) Representative: Bottero, Carlo
(86) International application number: PCT/IB2013/061359
(87) International publication number: WO 2014/102736

(56) References cited:
- CA-A1- 2 227 520
- JP-A- H08 134 508
- JP-A- H10 244 254
- US-A- 3 382 170
- US-A- 4 325 846

## Description

The present invention relates to a process for the removal of hydrocarbons from a body of water by means of selective permeation, and the relative apparatus.

Ever-increasing episodes of pollution, in particular of water systems, deriving from the release of hydrocarbons into the environment, in particular of crude oil during extraction, transportation and storage operations of the same, have made the necessity of controlling these operations more effectively and developing technologies for the recovery of spilled oil, extremely urgent.

The most commonly used mechanical-type methods adopt containment systems of crude oil in restricted areas (for example, so-called booms) and suction systems possibly coupled with absorption systems (for example, so-called skimmers). Crude-oil/water separation systems based on gravity (see for example patent US 3,784,010), associated with pumping devices, are also used.

Systems of the physico-chemical type have also been created, which are based on the use of solidifying agents, gelling agents, demulsifying agents, dispersing agents, absorbing agents, filtering systems, etc. The solidifying/gelling agents generally consist of substances which react with the crude oil to form a solid mass which floats on water. In order to obtain a good recovery, it is necessary, however, to use huge quantities of solidifying/gelling agent. The demulsifying agents are generally surfactants of the hydrophilic type which tend to break the emulsion in order to separate the two crude oil-water phases. The dispersing agents approximately have the same solubility in the two phases and therefore allow the crude oil to be dispersed in water in the form of droplets. The cleaning agents are capable of removing the oily substances from solid surfaces thanks to their detergent properties.

As far as the use of absorbing materials is concerned, these facilitate the passage of crude oil from the liquid phase to the solid phase by means of absorption, allowing an easier recovery of the polluting product. Different materials with absorbing properties have been developed, characterized by a high porosity and hydrophobicity, such as hydrophobized SiO₂ aerogels, zeolites made hydrophobic with dealumination processes or with the use of silylation agents, organo-clays, expanded perlite, graphite, polypropylene, polyurethane (see for example, the article of M.O. Adebajo et al., J. of Porous Materials, 10 (2003) 159-170) .

Patent US 5,725,805 describes an absorbing material composed of an organo-clay (clay modified with organic compounds having a binding group of the quaternary ammonium type) capable of solidifying crude oil at very low temperatures, unlike traditional organo-clays which function at temperatures higher than 20°C. This characteristic allows the use of the flocculating agent in cold environments, for example in arctic climates. A surface treatment of clay with suitable compounds insoluble in water also allows its floating properties to be improved.

Patent GB 1,096,420 describes the synthesis of an absorbing material consisting of granules of expanded perlite coated with a thin silicon film. With respect to untreated perlite, this treated material shows a selective absorption of crude oil and does not show release into the aqueous environment, also for long periods of time.

Patent application WO 2008/045433 describes a synthesis method of an absorbing material consisting of a superhydrophobic porous membrane composed of "nanowire" of the inorganic type, such as manganese oxide, modified on the surface with a thin film of hydrophobic compound, such as polydimethylsiloxane. The film allows the surface of the material to be transformed from hydrophilic to superhydrophobic, with a contact angle up to 170°. The film can be removed with a thermal treatment of the membrane which reacquires hydrophilicity. The material can be used, among other things, for the purification of a fluid contaminated by organic products, which are removed by absorption on part of the material itself.

A discharge-water filtration system is proposed in patent application FR 2,552,133, which comprises a floating barrier capable of filtering water contaminated by hydrocarbons: a filter cartridge allows the passage of water and withholds the organic phase by absorption.

Fuel filtration systems, in particular gasoil, are also well-known in literature, for the removal of water residues from the mixture directed towards the injector. The separation of the two phases takes place by permeation of the gasoil through a hydrorepellant filter (see for example patents GB 2,138,693, US 2008/0105629, EP 0 821 989).

In order to separate an aqueous phase from a hydrocarbon phase, coalescent filters are also used, for both the removal of water residues from fuels (see for example, patent EP 0 257 265) and for the decontamination of water bodies (see for example, patent GB 2,418,374). Coalescent filters are particularly effective when the separation must be effected on emulsions. These filters are composed of fine fibres/corrugated surfaces which capture the emulsified phase (water or gasoil) and force it to agglomerate in drops whose dimensions increase as they pass through the filter. Due to the different density with respect to the predominant liquid, the two phases can be separated by gravity. In the case of the purification of fuel, the water is separated in a collection tank at the outlet of the filter. In the presence of water contaminated by organic substances, such as hydrocarbons, the organic phase is brought to the form of drops which do not pass through the filter, but return in countercurrent onto the surface of the body of water.

Patent application CA 2 227 520 A1 describes a composite material consisting of particles of polyethylene (PE) and polypropylene (PP) sintered with polytetrafluoroethylene (PTFE), which exerts the function of interfacial tension modifier. This material can be used for the production of filters to be used for the removal of hydrocarbons from water. These filters, in fact, would be able of allowing the hydrocarbons to selectively permeate, thus enabling them to be separated from the aqueous phase. The use of powders of sintered polymeric materials, however, gives these filters a poor resistance to mechanical stress and physico-chemical attack on the part of the components present in the crude oil. Other examples of systems known from the prior art can be found in the patents JP10244254 and CA2227520.

The Applicant has observed that, for the removal of hydrocarbons from a body of water, following, for example, an oil spill in seas, rivers, lakes and the like, the mechanical methods so far studied are substantially ineffective and costly, in particular under extreme conditions, for example bad weather conditions, turbulences, etc. These methods, moreover, in any case require a subsequent treatment/purification phase in order to decontaminate the water and recover the spilled oil. Furthermore, crude oil/water separation systems based on gravity, i.e. on the different density of the two phases, have the disadvantage of requiring large volumes and/or lengthy separation times.

New-generation skimmers (developed for example by Elastec/American Marine) couple suction with the use of hydrophobic materials (discs/drums) having a high roughness, capable of selectively absorbing the organic phase, obtaining recovery rates of up to 10⁶ l/h and recovery efficiencies higher than 90%. These systems, however, are generally used in easily accessible areas, require frequent maintenance and continuous control by the operator, they consume energy for the continuous rotation of the absorbing discs and have a reduced efficiency with low-viscosity hydrocarbons (V. Broje et al, Environ. Sci. Technol. 40(24) (2006), 7914-7918).

Physico-chemical methods, on the other hand, require the use of high quantities of chemical products and do not allow the oil to be recovered as such. Furthermore, rather than a cleaning of the aqueous phase, these methods cause a dispersion of the hydrocarbon phase in the water.

With respect to the use of materials which absorb the hydrocarbon phase, the separation process of spilled crude oil evidently cannot be effected continuously, and the absorbing materials used must then be suitably treated in order to recover the crude oil. Furthermore, the application of these absorbing materials is intrinsically limited in its efficacy as the material has a limited absorption capacity.

The use of selective filtration systems, on the contrary, allows the process to be effected in continuous, in which the separation of the phases takes place in association with the direct collection of the permeate. The application of coalescent filters in the decontamination of water bodies is mainly useful when the two phases form an emulsion and the volume to be treated is limited (as, for example, in the case of the treatment of wastewater), whereas it is not very suitable for the removal and recovery of petroleum products spilled in large quantities over huge volumes of water. These methods, in fact, are practically only used in the car industry in the case of mixtures in which the aqueous phase is mainly a minority with respect to the hydrocarbon phase. Similarly, fuel filtration systems based on the use of hydrophobic porous supports are used for the removal of water residues from the mixture.

The Applicant has now found a process for the removal of hydrocarbons from a body of water in which the hydrocarbons are separated from the aqueous phase by means of selective permeation through a sintered porous filter surface-treated with at least one hydrophobic product, so as to collect the hydrocarbons and remove them from the water without using additional chemical products or products capable of absorbing hydrocarbons. This allows the body of water to be remediated, at the same time recovering the spilled hydrocarbons in a clean and substantially continuous way.

According to a first aspect, the present invention therefore relates to a process for the removal of hydrocarbons from a body of water, as specified in claim 1. In a second aspect, the present invention relates to an apparatus for removing hydrocarbons from a body of water, as specified in claim 11. As far as the filter is concerned, this consists of a sintered metal alloy, in particular steel, stainless steel or nickel alloys known with the trademark of Hastelloy™. Sintered filters made of metal alloy are well-known in the art and are used in various industrial fields thanks to their characteristics of high mechanical resistance, resistance to corrosion pressure and high temperatures, and also to brusque variations in the same. They are generally produced by filling a mould with the metal in the form of particles having predetermined dimensions, followed by sintering at a high temperature (generally slightly lower than the melting point of the metal) in a controlled atmosphere, so as to obtain a porous structure having high mechanical properties. The controlled atmosphere generally consists of endothermic gases, for example those deriving from a partial combustion process, mainly consisting of hydrogen, nitrogen and CO. The presence of hydrogen and/or CO preserves the end-product from oxidation during the sintering phase.

The average pore diameter of the sintered material ranges from 10 to 150 µm (µm = micrometres).

In order to make the filter made of a sintered material permeable to hydrocarbons and substantially impermeable to water, it is surface-treated with at least one hydrophobic product. The hydrophobic product is generally an organic product of the hydrocarbon type, possibly at least partially fluorinated, or a silicon product. The hydrophobic product is preferably selected from: high-molecular-weight hydrocarbons, preferably substituted with functional groups capable of interacting with the material forming the filter (for example, fatty acids or thiols having at least 12 carbon atoms), polyolefins; polystyrenes; polyalkylacrylates; polyalkylmethacrylates; silanes having at least one alkyl or fluoroalkyl group; polysiloxanes (for example polydimethylsiloxane).

In a particularly preferred embodiment, the filter is composed of a sintered metal alloy, in particular steel, stainless steel or nickel alloys known with the trademark Hastelloy™, surface-treated with at least one polysiloxane, in particular polydimethylsiloxane.

The hydrophobic product is preferably deposited on the surface of the filter using solutions containing the hydrophobizing agent, for example by means of spraying or repeated immersions, or by vapour phase deposition. Even more preferably, a vapour phase deposition technique is adopted, using hydrophobic products having a relatively low evaporation temperature (generally not higher than 300°C), which are heated so as to evaporate the product, or some of its components (J. Yuan et al. Nature Nanotech. 3 (2008) 332-336). The hydrophobic product is deposited on the surface of the filter in low quantities, which in any case are sufficient for obtaining the desired hydrophobizing effect, without requiring complex treatment.

It is important to note that the surface treatment of the filter with at least one hydrophobic product allows sintered filters to be used within a wide pore-size range, generally up to 200 µm, so as to increase the flow of crude oil removed and consequently the efficiency of the removal process. Without surface treatment, it would be practically impossible to use filters with sufficiently high porosities without jeopardizing the permeation selectivity of the hydrocarbons with respect to the water.

Between the outer surface of the filter, in contact with the hydrocarbons to be removed, and the inner surface of the filter, a pressure difference (Δp) lower than 100 mbar, preferably lower than 20 mbar, is preferably applied. In a preferred embodiment, said pressure difference applied is substantially null. The Applicant has in fact found that the application of a pressure difference between said surfaces through which the selective permeation of hydrocarbons takes place, in order to increase the flow of the same through the filter and consequently the efficiency of the process, can cause a consistent reduction in the selectivity, and therefore the process does not allow to obtain an effective separation of the hydrocarbons from the water, which tends to permeate together with the same hydrocarbons. The maximum Δp values indicated above are indicative and mainly depend on the type of filter used and the average pore diameter of the same, the type and viscosity of the hydrocarbon product to be removed, the temperature at which the process is carried out.

According to the invention, the filter made of sintered material has a hollow structure, for example a hollow cylindrical structure closed at one end, which defines an internal space in which the hydrocarbons permeated through the filter are collected, and from which the same are removed. Alternatively, the filter made of sintered material is inserted as a filtering window in a hollow structure which allows the hydrocarbons permeated inside said structure to be collected.

The removal of the hydrocarbons is effected by means of a suction device, for example a pump, discontinuously or, preferably, continuously.

The Applicant has found that the specific flow through the filter according to the present invention, can undergo a certain decrease with time, probably due to a progressive blockage of the pores present in the filtering material. This effect is particularly significant when the hydrocarbon phase must be separated from seawater. In order to rapidly reestablish the initial flow, the process according to the present invention preferably comprises a washing phase of the filter after a certain time of use. This phase can be effected by back-washing with an organic solvent suitable for dissolving the hydrocarbons. The solvent is therefore introduced into the filter and forced to flow through it from the inside outwardly. A counter-pressure higher than 1 bar, more preferably higher than 1.5 bar, can be generally applied to facilitate this phase.

The present invention is now further illustrated with particular reference to the following figures, in which:
Figures 1 and 2 are SEM microphotographs of the surface of the filter having an average pore-size equal to 15 µm (Example 4), before (Figure 1) and after (Figure 2) treatment with polydimethylsiloxane (PDMS);
Figure 3 is a schematic representation of a device used for effecting many of the examples provided hereunder, in which the flow-rate of the crude oil removed is measured and the latter is then reintroduced into the tank in which the body of water is present;
Figure 4 is a schematic representation of an apparatus for the removal of hydrocarbons from a body of water according to the present invention;
Figure 5 indicates the specific flow data with time determined according to Example 9, before and after back washing.

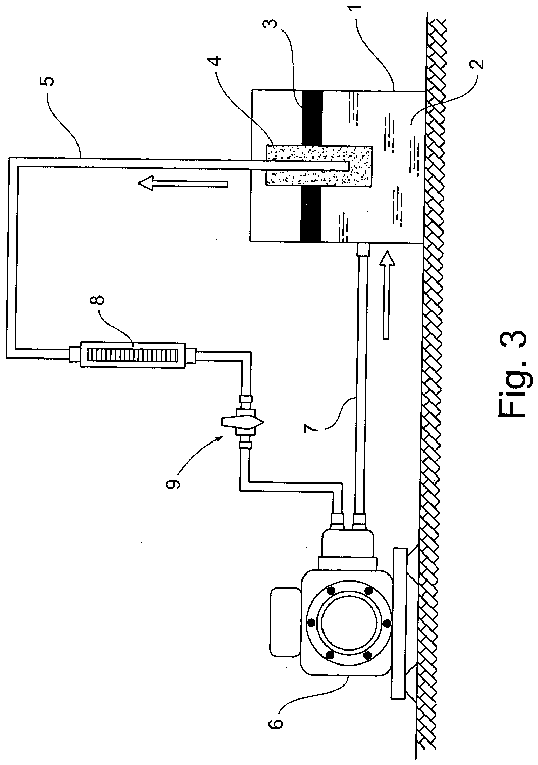

With reference to Figure 3, the device comprises a tank (1) in which there is a volume of water (2) and crude oil (3). The latter, having a lower density than the water, tends to stratify above the volume of water (2). A filter (4) made of sintered steel, having the form of a hollow cylinder closed below, is immersed in the tank (1). A first pipe (5) connected to a pump (6) is inserted inside said filter (4), which allows to suck the crude oil which permeates through the walls of the filter (4). The pump (6) is in turn connected by means of a second pipe (7) to the tank (1), in order to allow the re-entry of the crude oil into the tank (1). A flow-rate meter (8) is present along the pipe (5), which measures the volume of crude oil removed by means of the permeation process through the filter (4). The first pipe (5) is equipped with a valve (9) for regulating the inflow of the crude oil recovered.

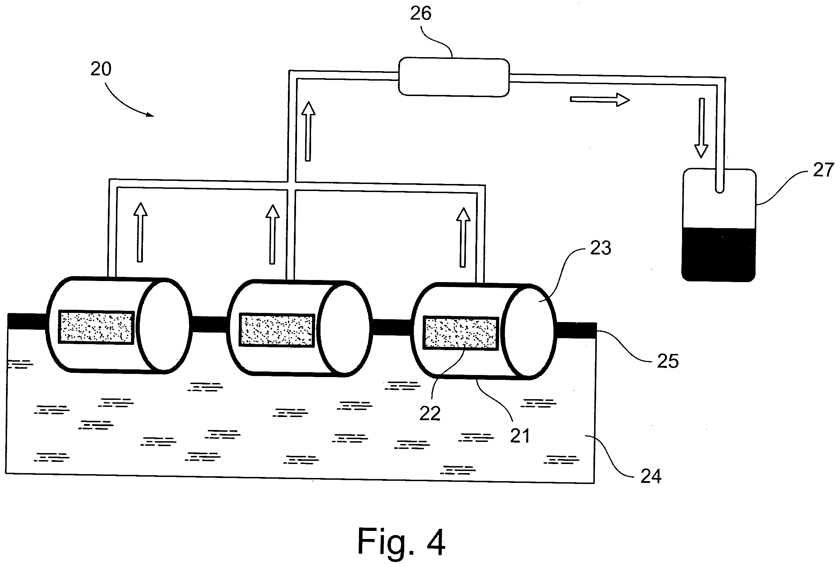

With reference to Figure 4, this schematically represents a possible embodiment of the apparatus for removing hydrocarbons according to the present invention. This apparatus (20) comprises a plurality of filtering devices (21), each having a filtering element (22) inserted in a hollow structure (23) suitable for receiving the hydrocarbon phase which permeates through the filtering element (22). Each hollow structure (23) can be possibly equipped with floating devices (not represented in Figure 4) which allow said structure to float on the body of water (24) with a floating line in correspondence with the filtering element (22), to allow the permeation of the hydrocarbons (25) present on the surface of the body of water (24). Each hollow structure (23) is connected by means of suitable ducts to a pump (26), which discharges the permeate collected into a collection tank (27), from which the hydrocarbons can be recovered.

The following examples are provided for purely illustrative purposes of the present invention and should not be considered as limiting the protection scope defined by the enclosed claims.

### EXAMPLE 1

A sintered filter Swagelok, Part Number SS-4F-K4-60, having an outer diameter = 1.25 cm, height = 2 cm, made of AISI 316 steel, average pore diameter = 60 µm, was installed in a device according to Figure 3. The filter was used as obtained from the supplier, without further cleaning treatment in addition to that effected by the producer according to the Swagelok, Standard Cleaning and Packaging SC-10 protocol.

Before installation, the filter was surface-treated with polydimethylsiloxane (PDMS) as follows.

The base and crosslinking agent, which form the product Sylgard® 184 Silicone Elastomer Kit (Dow Corning), were mixed in a ratio of 10:1 by volume and left to react at 70°C for about 1 hour, so as to obtain PDMS as a rubbery solid. This was then granulated with a cutter in order to obtain irregular-shaped particles having a particle-size distribution as indicated in Table 1 below:

**TABLE 1**

| Particle diameter (mm) | Quantity of particles (weight %) |
|---|---|
| > 4 | 81 |
| 4 - 2.8 | 17 |
| 2.8 - 2.36 | 1 |
| < 2.36 | 1 |

The hydrophobizing treatment was effected by inserting the filter in a muffle in which a container was positioned, closed by a lid having a vent, filled with PDMs prepared as described above. The muffle was heated at 250°C for 30 minutes.

Demineralized water (conductivity = 1 µS/cm at 20°C) and gasoil (density = 0.84 g/ml at 20°C, viscosity = 4.4 cP at 20°C), was introduced into the tank of the device according to Figure 3. The outer surface of the immersed filter is in contact with gasoil and water in a 50:50 ratio. The specific flow of gasoil sucked by the pump (6) was measured with time, by means of the flow-rate meter (8). The water content (Karl Fischer method) was determined on samples of the gasoil removed, collected at different times. The results are indicated in Table 2.

**TABLE 2**

| (pore diameter 60 µm) | | |
|---|---|---|
| Time (min) | Specific flow (l/h·m²) | Content of H₂O (weight %) |
| 6 | 280 | n.d. |
| 12 | 261 | n.d. |
| 22 | 245 | < 0.5 |
| 63 | 297 | n.d. |
| 69 | 271 | n.d. |
| 75 | 320 | < 0.5 |

| | | |
|---|---|---|
| n.d. = not determined | | |

From the above data, it can be seen that the treatment of the sintered filter allows a selective permeation of the gasoil from a water/gasoil mixture, which is substantially constant with time.

### EXAMPLE 2

A sintered filter Swagelok, Part Number SS-4F-K4-90, having an outer diameter = 1.25 cm, height = 2 cm, made of AISI 316 steel, average pore diameter = 90 µm, was installed in the same device according to Figure 3. The filter was subjected to hydrophobizing treatment with PDMS as described in Example 1 (weight variation +84 µg/g, expressed as an increase in weight of the filter against the hydrophobizing treatment, in micrograms per gram of filter).

The permeation test was carried out as described in Example 1, except for the fact that South Louisiana crude oil (density = 0.86 g/ml at 20°C, viscosity = 12.3 cP at 20°C), was used instead of gasoil, with an outer surface of the immersed filter in contact with crude oil and water in a ratio of 54:46. The results are indicated in Table 3.

**TABLE 3**

| (pore diameter 90 µm) | | |
|---|---|---|
| Time (min) | Specific flow (l/h·m²) | Content of H₂O (weight %) |
| 11 | 75 | -- |
| 17 | 120 | < 0.5 |
| 23 | 116 | -- |
| 270 | 116 | < 0.5 |

From the above data, it can be seen that the treatment of the sintered filter allows a selective permeation of the crude oil from a water/crude oil mixture, which is substantially constant with time.

### EXAMPLE 3

Example 2 was repeated with the same filter having an average pore diameter = 90 µm, pretreated with PDMS, and with the same South Louisiana crude oil. Seawater (conductivity = 49 mS/cm at 20°C) was used instead of demineralized water. The outer surface of the immersed filter was exposed to crude oil and water in a ratio of 54:46.

The specific flow of crude oil sucked by the pump (6) was measured with time, by means of the flow-rate meter (8). The water content (Karl Fischer method) was determined on samples of crude oil removed, collected at different times. The results are indicated in Table 4.

**TABLE 4**

| (pore diameter 90 µm) | | |
|---|---|---|
| Time (min) | Specific flow (l/h·m²) | Content of H₂O (weight %) |
| 11 | 93 | -- |
| 17 | 124 | < 0.5 |
| 83 | 69 | < 0.5 |

In this example, compared with Example 2, it can be seen that the use of seawater, in substitution of demineralized water, did not cause any significant variations in the permeability and selectivity of the filtering material.

### EXAMPLE 4

The influence of the pressure difference (Δp) between outer wall and inner wall of the filter was evaluated, using the same measurement device as the previous examples. Well water (conductivity = 90 mS/cm at 20°C) and Tresauro crude oil (density 0.91 g/ml at 20°C, viscosity 119 cP at 20°C) were used for the measurements.

The specific flow of the crude oil removed was measured at increasing Δp values, using a pneumatic system for generating the pressure difference. Filters of the same type indicated in Example 1 were used, having average pore dimensions equal to 15 µm, 60 µm and 90 µm, pretreated with PDMS according to the procedure described in Example 1. The outer surface of each filter immersed was exposed to crude oil and water in a ratio of 50:50 for the 60 and 90 µm filters, and in a ratio of 60:40 for the 15 µm filter.

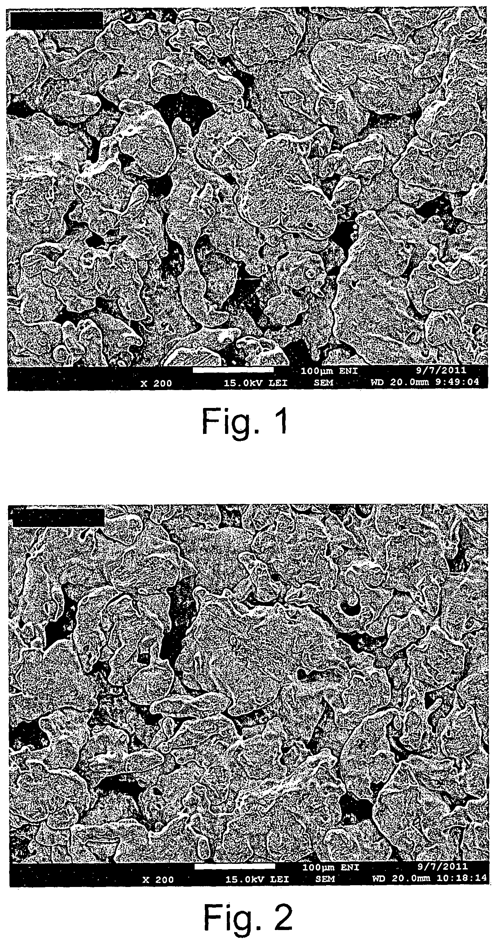

Figures 1 and 2 enclosed with the present description show two SEM images relating to the surface of the filter having an average pore-size equal to 15 µm, taken before treatment with PDMS (Figure 1) and after treatment (Figure 2). On comparing these images, no difference is observed between the surface before and after the treatment with PDMS. The photoemission spectrum (XPS) of the filter treated with PDMS, however, showed a significant increase in the signal relating to silicon and oxygen, elements of which PDMS is composed, with respect to the non-treated filter.

The specific flow values were indicated if the permeated crude oil has a water content lower than 5% by weight (Karl-Fisher method).

The results are indicated in Table 5.

**TABLE 5**

| Filter 15 µm | | Filter 60 µm | | Filter 90 µm | |
|---|---|---|---|---|---|
| Δp (mbar) | Specific flow (l/h·m²) | Δp (mbar) | Specific flow (l/h·m²) | Δp (mbar) | Specific flow (l/h·m²) |
| 3 | < 1 | 2 | 33 | 2 | 131 |
| 6 | < 1 | 4 | 73 | 5 | 436 |
| 15 | 1 | 6 | 85 | 6 | -- |
| 20 | 2 | 9 | 121 | 9 | -- |
| 25 | 5 | 12 | 109 | -- | -- |
| 30 | 2 | 15 | 97 | -- | -- |
| -- | -- | 18 | 121 | -- | -- |
| -- | -- | 21 | -- | -- | -- |

### EXAMPLE 5

A sintered filter GKN Sinter Metals, Article Code 9461, having an outer diameter = 2.54 cm, height = 5.6 cm, made of AISI 316 steel, with an average pore diameter equal to 50 µm, was installed on the same device according to Figure 3. The filter was subjected to hydrophobizing treatment with PDMS as described in Example 1, except for the fact that the treatment was continued for 2 hours.
The permeation test was carried out as described in Example 1, using the same type of water and gasoil, with an outer surface of the immersed filter in contact with gasoil and water in a ratio of 40:60. The specific flow of gasoil sucked by the pump (6) was measured with time, by means of the flow-rate meter (8). The results are indicated in Table 6.

**TABLE 6**

| (pore diameter 50 µm) | |
|---|---|
| Time (hours) | Specific flow (l/h·m²) |
| 0 | 301 |
| 3 | 327 |
| 6 | 298 |
| 24 | 282 |
| 31 | 265 |
| 47 | 258 |
| 55 | 250 |
| 78 | 274 |
| 101 | 269 |
| 191 | 213 |
| 217 | 213 |
| 246 | 216 |
| 263 | 199 |

Water contents in the gasoil recovered higher than 5% by weight were never observed. From what is indicated, the high stability of the performances of the sintered filter with time can be observed.

### EXAMPLE 6

A sintered filter GKN Sinter Metals, Article Code 9461, having an outer diameter = 2.54 cm, height = 5.6 cm, made of AISI 316 steel, with an average pore diameter equal to 100 µm, was installed on the same device according to Figure 3. The filter was subjected to hydrophobizing treatment with PDMS as described in Example 1, except for the fact that the treatment was continued for 2 hours.

The permeation test was carried out as described in Example 1, using the same type of water and gasoil, with an outer surface of the immersed filter in contact with gasoil and water in a ratio of 40:60. The specific flow of gasoil sucked by the pump (6) was measured with time, by means of the flow-rate meter (8). The results are indicated in Table 7.

**TABLE 7**

| (pore diameter 100 µm) | |
|---|---|
| Time (hours) | Specific flow (l/h·m²) |
| 0 | 728 |
| 1 | 716 |
| 5 | 728 |
| 6 | 728 |
| 23 | 663 |
| 30 | 663 |
| 47 | 718 |
| 71 | 618 |
| 78 | 644 |
| 143 | 635 |
| 145 | 651 |
| 176 | 654 |
| 177 | 539 |
| 182 | 594 |
| 200 | 532 |
| 205 | 576 |
| 206 | 532 |
| 224 | 509 |
| 254 | 559 |

Water contents in the gasoil recovered higher than 5% by weight were never observed. From what is indicated, with a higher average pore diameter with respect to Example 5, a high stability of the performances of the sintered filter with time can be observed, with a significant increase in the specific flow.

### EXAMPLE 7 (not according to the invention)

Permeation tests were carried out on glass filters, using:
a Gooch filter (producer Duran Group, porosity 4, Code 25 852 24) made of sintered glass, with a maximum nominal pore diameter of 10-16 µm;
a Gooch filter (producer Duran Group, porosity 4, Code 25 852 21) made of sintered glass, with a maximum nominal pore diameter of 100-160 µm.

The filters were used as received from the supplier, without preliminary washings.

The hydrophobizing treatment with PDMS was effected as described in Example 1.

For the permeation test, the Gooch filter, having a the form of a glass with non-filtering flared walls and a filtering bottom, was tilted by 45° and the hydrocarbon/water mixture was poured into the upper part of the filter, so as to obtain a contact of the filtering bottom with both phases. The permeate was collected from the lower part of the filter and subjected to analysis. The tests were effected with the same type of water and gasoil as Example 1.

A high selectivity of the treated sintered glass filters can be observed from these tests, as in both of the examples, the permeation of the gasoil alone was noted, without phase separation of the permeate. In this configuration, it was not possible to measure the specific flow, however, an increase in the flow was observed with an increase in the average pore diameter.

### EXAMPLE 8 (comparative)

Example 7 was repeated under the same conditions and with the same materials, except for the fact that the sintered glass filters were not subjected to hydrophobizing treatment. It was observed that these filters are selective with respect to water permeation, i.e. permeation through the filters of the aqueous phase alone was observed, without any phase separation in the permeate. Also in this case, the flow increases with an increase in the average pore diameter.

### EXAMPLE 9

A sintered filter GKN Sinter Metals, Article Code 9461, having an outer diameter = 2.54 cm, height = 5.6 cm, made of AISI 316 steel, with an average pore diameter equal to 100 µm, was installed on the same device according to Figure 3. The filter was subjected to hydrophobizing treatment with PDMS as described in Example 1, except for the fact that the treatment was continued for 2 hours.

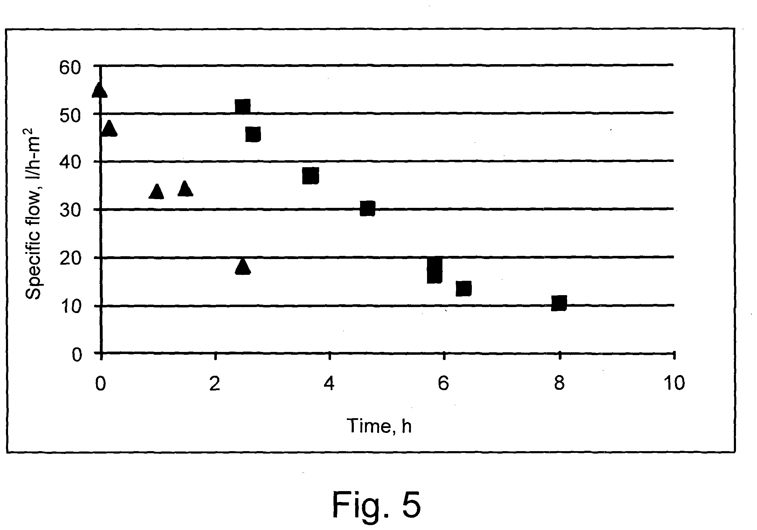

Seawater was introduced into the tank of the device (conductivity = 49 mS/cm at 20°C) and Green Canyon crude oil (density = 0.88 g/ml at 20°C, viscosity = 15 cP at 20°C). The outer surface of the immersed filter is exposed to oil and water in a ratio of 41-59. The specific flow of crude oil sucked by the pump (6) was measured with time, by means of the flow-rate meter (8). The water content (Karl Fischer method) was determined on samples of crude oil removed, collected at different times. The results are indicated in the graph of Figure 5 (symbols ▲). A water content lower than 0.5% by weight was determined in all samples.

After this first test, the filter was subjected to back washing with n-hexane at room temperature, with a back washing pressure of 1.6 bar for a time of about 45 minutes. This allowed the permeation rate observed at the beginning of the first test, to be re-established, as illustrated by the data indicated in Figure 5 (symbols ■).

From this test, it can be seen that, in the case of a reduction in the permeation flow of crude oil with time, a washing, preferably a back washing, allows the initial performances to be re-established.

## Claims

1. A process for removing hydrocarbons in a substantially continuous way from a body of water, comprising:
immersing in said body of water at least one filter having a hollow structure or inserted as a filtering window in a hollow structure, said filter being made of sintered porous metal alloy having an average pore diameter ranging from 10 to 150 µm, and surface-treated with at least one hydrophobic product;
keeping the hydrocarbons in contact with an outer surface of said at least one filter in order to allow selective permeation of the hydrocarbons through said at least one filter from said outer surface to an inner surface of the filter; wherein, between the outer surface of the filter, in contact with the hydrocarbons to be removed, and the inner surface of the filter, a pressure difference (Δp) lower than 100 mbar is present;
removing the hydrocarbon phase permeated through said at least one filter by means of a suction device.

2. The process according to claim 1, wherein said sintered metal alloy is steel, stainless steel or nickel alloys.

3. The process according to any of the previous claims, wherein said at least one hydrophobic product is an organic product of the hydrocarbon type, possibly at least partially fluorinated, or a silicon product.

4. The process according to any of the previous claims, wherein said at least one hydrophobic product is selected from: high-molecular-weight hydrocarbons, preferably substituted with functional groups capable of interacting with the material forming the filter; polyolefins; polystyrenes; polyalkylacrylates; polyalkylmethacrylates; silanes having at least one alkyl or fluoroalkyl group; polysiloxanes.

5. The process according to any of the previous claims, wherein, between the outer surface of the filter, in contact with the hydrocarbons to be removed, and the inner surface of the filter, a pressure difference (Δp) lower than 20 mbar, is present.

6. The process according to claim 5, wherein said pressure difference is substantially null.

7. The process according to any of the previous claims, wherein said at least one filter made of sintered material has a hollow structure, which defines an internal space in which the hydrocarbons permeated through the filter are collected, and from which the same are removed.

8. The process according to any of the previous claims from 1 to 6, wherein said at least one filter made of sintered material is inserted as a filtering window in a hollow structure which allows collecting the hydrocarbons permeated inside said structure.

9. The process according to any of the previous claims, additionally comprising a washing phase of the filter after a pre-established period of use.

10. The process according to claim 9, wherein said washing phase is carried out as back washing with an organic solvent suitable for dissolving the hydrocarbons.

11. An apparatus for removing hydrocarbons in a substantially continuous way from a body of water, comprising:
- at least one filter having a hollow structure or inserted as a filtering window in a hollow structure, said filter being made of sintered porous metal alloy having an average pore diameter ranging from 10 to 150 µm, and surface-treated with at least one hydrophobic product;
- at least one suction device in order to remove the hydrocarbon phase permeated through said at least one filter.

12. The apparatus according to claim 11, wherein said sintered metal alloy is steel, stainless steel or nickel alloys.

13. The apparatus according to any of claims 11-12, wherein said at least one hydrophobic product is an organic product of the hydrocarbon type, possibly at least partially fluorinated, or a silicon product.

14. The apparatus according to any of claims 11-13, wherein said at least one hydrophobic product is selected from: high-molecular-weight hydrocarbons, preferably substituted with functional groups capable of interacting with the material forming the filter; polyolefins; polystyrenes; polyalkylacrylates; polyalkylmethacrylates, silanes having at least one alkyl or fluoroalkyl group; polysiloxanes.

15. The apparatus according to any of claims 11-14, wherein said at least one filter made of sintered material has a hollow structure, which defines an internal space in which the hydrocarbons permeated through the filter are collected, and from which the same are removed.

16. The apparatus according to any of claims 11-15, wherein said at least one filter made of sintered material is inserted as a filtering window in a hollow structure which allows collecting the hydrocarbons permeated inside said structure.

## Patentansprüche

1. Verfahren zur Entfernung von Kohlenwasserstoffen aus einer Wassermenge in einer im Wesentlichen kontinuierlichen Weise, umfassend:
Einbringen in die Wassermenge mindestens eines Filters mit einer Hohlstruktur oder eingefügt als ein Filterfenster in einer Hohlstruktur, wobei der Filter aus gesinterter poröser Metalllegierung mit einem durchschnittlichen Porendurchmesser im Bereich von 10 bis 150 µm hergestellt wurde, und oberflächenbehandelt mit mindestens einem hydrophoben Produkt;
Halten der Kohlenwasserstoffe in Kontakt mit einer äußeren Oberfläche des mindestens einen Filters, um die selektive Durchdringung der Kohlenwasserstoffe durch den mindestens einen Filter von der äußeren Oberfläche zu der inneren Oberfläche des Filters zu ermöglichen; wobei zwischen der äußeren Oberfläche des Filters, im Kontakt mit den zu entfernenden Kohlenwasserstoffen, und der inneren Oberfläche des Filters eine Druckdifferenz (Δp) von weniger als 100 mbar vorliegt;
Entfernung der durch den mindestens einen Filter durchgedrungenen Kohlenwasserstoffphase mittels einer Saugvorrichtung.

2. Verfahren nach Anspruch 1, worin die gesinterte Metalllegierung Stahl, Edelstahl oder Nickellegierungen ist.

3. Verfahren nach irgendeinem der vorhergehenden Ansprüche, wobei das mindestens eine hydrophobe Produkt ein organisches Produkt vom Kohlenwasserstofftyp ist, gegebenenfalls mindestens teilweise fluoriert, oder ein Silikonprodukt.

4. Verfahren nach irgendeinem der vorhergehenden Ansprüche, wobei das mindestens eine hydrophobe Produkt ausgewählt ist aus: Kohlenwasserstoff mit hohem Molekulargewicht, vorzugsweise substituiert mit funktionalen Gruppen, die in der Lage sind mit den Materialien, die den Filter bilden, wechselzuwirken; Polyolefine; Polystyrene; Polyalkylacrylate; Polyalkylmethacrylate; Silane mit mindestens einer Alkyl- oder Fluoralkylgruppe; Polysiloxane.

5. Verfahren nach irgendeinem der vorhergehenden Ansprüche, wobei zwischen der äußeren Oberfläche des Filters in Kontakt mit den zu entfernenden Kohlenwasserstoffen und der inneren Oberfläche des Filters eine Druckdifferenz (Δp) von weniger als 20 mbar vorliegt.

6. Verfahren nach Anspruch 5, wobei die Druckdifferenz im Wesentlichen Null ist.

7. Verfahren nach irgendeinem der vorhergehenden Ansprüche, wobei der mindestens eine aus gesintertem Material hergestellte Filter eine Hohlstruktur hat, die einen inneren Raum definiert, in dem die durch den Filter hindurch gelangten Kohlenwasserstoffe aufgefangen werden und von dem dieselben entfernt werden.

8. Verfahren nach irgendeinem der vorhergehenden Ansprüche 1 bis 6, worin der aus gesintertem Material hergestellte mindestens eine Filter als ein Filterfenster in eine Hohlstruktur eingefügt ist, sodass das die in die Struktur eingedrungenen Kohlenwasserstoffe aufgefangen werden können.

9. Verfahren nach irgendeinem der vorhergehenden Ansprüche, zusätzlich umfassend eine Waschphase des Filters nach einer vorbestimmten Verwendungszeit.

10. Verfahren nach Anspruch 9, wobei die Waschphase als Rückwaschen mit einem Lösemittel durchgeführt wird, das sich dafür eignet die Kohlenwasserstoffe aufzulösen.

11. Vorrichtung zur Entfernung von Kohlenwasserstoffe in einer im Wesentlichen kontinuierlichen Weise aus einer Wassermenge, umfassend:
- mindestens einen Filter mit einer Hohlstruktur oder eingefügt als ein Filterfenster in einer Hohlstruktur, wobei der Filter aus einem gesinterten porösen Metalllegierung mit einem durchschnittlichen Porendurchmesser im Bereich von 10 bis 150 µm hergestellt wurde, und oberflächenbehandelt mit mindestens einem hydrophoben Produkt;
- mindestens eine Saugvorrichtung, um die durch den mindestens einen Filter hindurchgelangte Kohlenwasserstoffphase zu entfernen.

12. Vorrichtung nach Anspruch 11, wobei die gesinterte Metalllegierung Stahl, Edelstahl oder Nickellegierungen ist.

13. Vorrichtung nach irgendeinem der Ansprüche 11-12, worin das mindestens eine hydrophobe Produkt ein organisches Produkt vom Kohlenwasserstofftyp ist, ggf. mindestens teilweise fluoriert, oder ein Silikonprodukt.

14. Vorrichtung nach irgendeinem der Ansprüche 11-13, wobei das mindestens eine hydrophobe Produkt ausgewählt ist aus: Kohlenwasserstoffe mit hohem Molekulargewicht, vorzugsweise substituiert mit funktionalen Gruppen, die in der Lage sind mit dem den Filter bildenden Material wechselzuwirken; Polyolefine; Polystyrene; Polyalkylacrylate; Polyalkylmethacrylate; Silane mit mindestens einer Alkyl- oder Fluoralkylgruppe; Polysiloxane.

15. Vorrichtung nach irgendeinem der Ansprüche 11-14, worin der aus gesintertem Material hergestellte mindestens eine Filter eine Hohlstruktur hat, die einen inneren Raum definiert, in dem die durch den Filter hindurchgelangten Kohlenwasserstoffe aufgefangen werden können und von dem dieselben entfernt werden.

16. Vorrichtung nach irgendeinem der Ansprüche 11-15, wobei der aus gesinterten Material hergestellte mindestens eine Filter als ein Filterfenster in eine Hohlstruktur eingeführt wird, sodass die in die Struktur eingedrungenen Kohlenwasserstoffe aufgefangen werden können.

## Revendications

1. Procédé pour retirer des hydrocarbures de manière pratiquement continue d'une étendue d'eau, comportant les étapes suivantes :
- plonger dans ladite étendue d'eau au moins un filtre, présentant une structure creuse ou inséré en tant que fenêtre filtrante dans une structure creuse, lequel filtre est en un alliage métallique poreux et fritté dans lequel le diamètre moyen des pores vaut de 10 à 150 µm, et a subi un traitement de surface avec au moins un produit hydrophobe,
- maintenir les hydrocarbures en contact avec une surface externe dudit filtre au nombre d'au moins un, afin de laisser les hydrocarbures traverser sélectivement par perméation ledit filtre au nombre d'au moins un et passer ainsi de ladite surface externe vers une surface interne du filtre, étant entendu qu'entre la surface externe du filtre, au contact des hydrocarbures à éliminer, et la surface interne du filtre, il règne une différence de pression (Δp) inférieure à 100 mbar,
- et retirer, au moyen d'un dispositif d'aspiration, la phase d'hydrocarbures ayant, par perméation, traversé ledit filtre au nombre d'au moins un.

2. Procédé conforme à la revendication 1, dans lequel ledit alliage métallique fritté est un acier, un acier inoxydable ou un alliage de nickel.

3. Procédé conforme à l'une des revendications précédentes, dans lequel ledit produit hydrophobe au nombre d'au moins un est un produit organique de type hydrocarbure, éventuellement au moins partiellement fluoré, ou un produit dérivé du silicium.

4. Procédé conforme à l'une des revendications précédentes, dans lequel ledit produit hydrophobe au nombre d'au moins un est choisi parmi les suivants : hydrocarbures à masse molaire élevée, de préférence porteurs de substituants qui sont des groupes fonctionnels capables d'interagir avec le matériau formant le filtre, polyoléfines, polystyrènes, poly(acrylate d'alkyle)s, poly(méthacrylate d'alkyle)s, silanes comportant au moins un groupe alkyle ou fluoroalkyle, et polysiloxanes.

5. Procédé conforme à l'une des revendications précédentes, dans lequel il règne, entre la surface externe du filtre au contact des hydrocarbures à éliminer et la surface interne du filtre, une différence de pression (Δp) inférieure à 20 mbar.

6. Procédé conforme à la revendication 5, dans lequel ladite différence de pression est pratiquement nulle.

7. Procédé conforme à l'une des revendications précédentes, dans lequel ledit filtre, au nombre d'au moins un, en matériau fritté est doté d'une structure creuse qui délimite un espace interne dans lequel sont collectés les hydrocarbures qui ont traversé le filtre par perméation et duquel ceux-ci sont retirés.

8. Procédé conforme à l'une des revendications 1 à 6 précédentes, dans lequel ledit filtre, au nombre d'au moins un, en matériau fritté est inséré en tant que fenêtre filtrante dans une structure creuse qui permet de collecter les hydrocarbures pénétrant par perméation à l'intérieur de ladite structure.

9. Procédé conforme à l'une des revendications précédentes, qui comprend en outre une étape de lavage du filtre, après une durée d'utilisation fixée au préalable.

10. Procédé conforme à la revendication 9, dans lequel ladite étape de lavage est réalisée sous la forme d'un rétro-lavage effectué à l'aide d'un solvant organique propre à dissoudre les hydrocarbures.

11. Appareil servant à retirer des hydrocarbures de manière pratiquement continue d'une étendue d'eau, comportant :
- au moins un filtre, présentant une structure creuse ou inséré en tant que fenêtre filtrante dans une structure creuse, lequel filtre est en un alliage métallique poreux et fritté dans lequel le diamètre moyen des pores vaut de 10 à 150 µm, et a subi un traitement de surface avec au moins un produit hydrophobe,
- et au moins un dispositif d'aspiration servant à retirer la phase d'hydrocarbures ayant, par perméation, traversé ledit filtre au nombre d'au moins un.

12. Appareil conforme à la revendication 11, dans lequel ledit alliage métallique fritté est un acier, un acier inoxydable ou un alliage de nickel.

13. Appareil conforme à l'une des revendications 11 à 12, dans lequel ledit produit hydrophobe au nombre d'au moins un est un produit organique de type hydrocarbure, éventuellement au moins partiellement fluoré, ou un produit dérivé du silicium.

14. Appareil conforme à l'une des revendications 11 à 13, dans lequel ledit produit hydrophobe au nombre d'au moins un est choisi parmi les suivants : hydrocarbures à masse molaire élevée, de préférence porteurs de substituants qui sont des groupes fonctionnels capables d'interagir avec le matériau formant le filtre, polyoléfines, polystyrènes, poly(acrylate d'alkyle)s, poly(méthacrylate d'alkyle)s, silanes comportant au moins un groupe alkyle ou fluoroalkyle, et polysiloxanes.

15. Appareil conforme à l'une des revendications 11 à 14, dans lequel ledit filtre, au nombre d'au moins un, en matériau fritté est doté d'une structure creuse qui délimite un espace interne dans lequel sont collectés les hydrocarbures qui ont traversé le filtre par perméation et duquel ceux-ci sont retirés.

16. Appareil conforme à l'une des revendications 11 à 15, dans lequel ledit filtre, au nombre d'au moins un, en matériau fritté est inséré en tant que fenêtre filtrante dans une structure creuse qui permet de collecter les hydrocarbures pénétrant par perméation à l'intérieur de ladite structure.
